# FASCICULE DE BREVET EUROPEEN

(11) **EP 1 140 467 B1**
(45) Date de publication et mention de la délivrance du brevet: **20.11.2002**
(21) Numéro de dépôt: 99958330.5
(22) Date de dépôt: 15.12.1999
(51) Int. Cl.: B29C 51/20, B29C 51/44, B29C 33/44

(54) **DISPOSITIF DE BASCULEMENT DE MOULE DE THERMOFORMAGE A CAME HELICOIDALE**
VORRICHTUNG ZUM UMKIPPEN VON EINEM WARMUMFORMWERKZEUG MIT EINER SCHRAUBENFÖRMIG BEWEGTEN NOCKENFOLGEEINHEIT
TILTING MECHANISM FOR THERMOFORMING MOULD WITH HELICAL CAM

(30) Priorité: 15.12.1998 FR 9815815
(43) Date de publication de la demande: 10.10.2001
(73) Titulaire: S.A. CMA, 27220 Saint Andre de L'eure (FR)
(72) Inventeur: LEROI, Paul, F-91130 Ris-Orangis (FR)
(74) Mandataire: Callon de Lamarck, Jean-Robert
(86) Numéro de dépôt international: FR9903143
(87) Numéro de publication internationale: WO00035659

(56) Documents cités:
- DE-A- 3 601 937
- DE-A- 19 710 475
- DE-A- 19 716 655
- US-A- 4 462 952

## Description

La présente invention concerne de manière générale les machines de thermoformage de pots en matière plastique, tels que des pots de yaourt, et plus particulièrement un dispositif de basculement d'un moule de formage de pots en matière plastique, entre une position horizontale et une position verticale.

Elle concerne également une machine de thermoformage comprenant un tel dispositif de basculement.

Dans une machine de thermoformage de pots en matière plastique, le moule de formage muni de ses alvéoles est généralement monté solidaire d'un plateau de presse horizontal, et le formage des pots s'effectue par un mouvement vertical relatif du plateau de presse et d'un poinçon de formage placé au-dessus des alvéoles du moule.

En position de formage, les alvéoles du moule sont placées de sorte que leurs ouvertures soient dirigées en direction du poinçon de formage, c'est-à-dire avec leurs axes s'étendant verticalement.

En outre, pour positionner des banderoles de décor dans le moule de formage, il est prévu généralement un bloc d'introduction placé sur un côté latéral de la presse et apte à présenter les banderoles enroulées sur elles-même en boucles selon une direction horizontale.

Ainsi, pour pouvoir introduire les banderoles de décor à l'intérieur des alvéoles du moule de formage, il est nécessaire de placer lesdites alvéoles du moule de sorte que leurs ouvertures soient dirigées vers le côté latéral où est placé le bloc d'introduction, c'est-à-dire avec leurs axes orientés horizontalement.

Pour ce faire, il est prévu un dispositif de basculement du moule de formage entre la position verticale de thermoformage et la position horizontale de mise en place du décor.

Les dispositifs de basculement du moule de formage actuellement connus, sont des dispositifs pneumatiques ou oléo-pneumatiques.

Les dispositifs pneumatiques sont constitués essentiellement par un vérin à air ou à fluide sous pression, et les dispositifs oléo-pneumatiques comportent généralement un vérin assisté par un dispositif mécanique embarqué sur la presse de formage.

Toutefois, de tels dispositifs présentent plusieurs inconvénients.

Tout d'abord, compte tenu de la masse que représente le moule de formage et de la vitesse de pivotement élevée imposée pour respecter les cadences de production de la machine de thermoformage, le mouvement de pivotement du moule provoqué par un actionneur pneumatique, est très difficile à amortir.

Ainsi, le mouvement de pivotement du moule de formage est généralement un mouvement violent et très bruyant.

De plus, ce mouvement de basculement n'est pas constant dans le temps. Ceci est dû principalement à un échauffement et à l'usure de l'actionneur pneumatique. Cela peut être également dû à une chute de pression intempestive sur la ligne d'alimentation en air ou en fluide de l'actionneur pneumatique.

Par ailleurs, concernant les dispositifs oléo-pneumatiques assistés par une mécanique embarquée sur la presse de formage, cette mécanique embarquée est relativement lourde et peut occasionner éventuellement un bas lourd limitant alors la cadence de production de la machine de formage. La mécanique embarquée est relativement encombrante et restreint alors l'accessibilité à la presse elle-même.

Au surplus, les réglages des actionneurs pneumatiques et oléo-pneumatiques des dispositifs déjà connus, sont peu fiables et doivent être repris régulièrement.

Les documents DE-A-19 716 655 et DE-A-19 710 475 décrivent des dispositifs de basculement de moules qui utilisent une ou plusieurs cames.

Afin de résoudre les inconvénients précités de l'état de la technique, la présente invention propose un nouveau dispositif de basculement du moule de formage entre une position horizontale et une positon verticale dans une machine de thermoformage, caractérisé en ce qu'il comprend une came à gorge hélicoïdale s'étendant angulairement sur un angle de 90 degrés, montée à rotation libre sur un axe horizontal et actionnée à pivotement par un galet de came engagé dans ladite gorge hélicoïdale et animé d'un mouvement linéaire alternatif sous l'action d'un moyen de transmission du mouvement de rotation d'un moteur électrique d'entraînement à rotation.

Selon une caractéristique avantageuse du dispositif selon l'invention, la came est un cylindre d'axe X pourvu d'une part d'un méplat pour le montage du moule de formage et d'autre part à l'opposé dudit méplat, de la gorge constituée par une portion d'hélice qui s'étend linéairement pratiquement sur toute la longueur dudit cylindre.

Le profil de la came hélicoïdale est étudié de façon à obtenir un mouvement de pivotement du moule de formage souple et sans choc entre la position verticale et la position horizontale.

En outre, le dispositif de basculement selon l'invention nécessite une maintenance réduite et un minimum de réglage.

En particulier, l'utilisation d'un moteur électrique d'entraînement en rotation lié à des moyens mécaniques de basculement du moule, permet d'obtenir un mouvement de basculement répétitif dans le temps.

Selon d'autres caractéristiques non limitatives et avantageuses du dispositif de basculement selon l'invention :
- la came comporte un logement dans lequel est monté le moule de formage, ledit logement étant formé dans ledit méplat,
- la came est un cylindre d'axe X, raccordé à un support de moule de formage placé selon l'axe X à la suite de ladite came,
- le galet de came effectue un mouvement linéaire alternatif parallèlement à l'axe de rotation de la came,
- le système de transmission du dispositif de basculement comprend un ensemble bielle/manivelle raccordé d'une part à l'arbre de sortie du moteur d'entraînement électrique en rotation et d'autre part audit galet de came par l'intermédiaire d'un bras s'étendant parallèlement à l'axe de rotation de la came,
- le moteur électrique d'entraînement en rotation effectue une rotation complète en environ 1 seconde,
- le moteur d'entraînement en rotation est un moto-réducteur,
- le dispositif comporte deux cames à gorge hélicoïdale pour le basculement de deux moules de formage, actionnées par deux galets de came animés d'un mouvement linéaire altematif sous l'action du même moyen de transmission du mouvement de rotation du moteur électrique d'entraînement.

L'invention propose également une machine de thermoformage de pots en matière plastique, qui comprend au moins un moule de formage des pots en matière plastique, un poinçon de formage coopérant avec ledit moule pour la formation des pots en matière plastique, un bloc d'introduction de banderoles de décor à l'intérieur des alvéoles du moule de formage, positionné latéralement par rapport au moule de formage, et un dispositif de basculement du moule selon l'invention.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en coupe longitudinale selon l'axe d'une came d'un mode de réalisation du dispositif de basculement selon l'invention,
- les figures 2a et 2b sont des vues schématiques en perspective suivant deux côtés opposés d'une came hélicoïdale du dispositif de basculement de la figure 1, et
- la figure 3 est une vue en coupe selon le dispositif de basculement représenté sur la figure 1, chaque partie inférieure de came à gorge hélicoïdale étant vue en coupe dans le plan du galet d'actionnement.

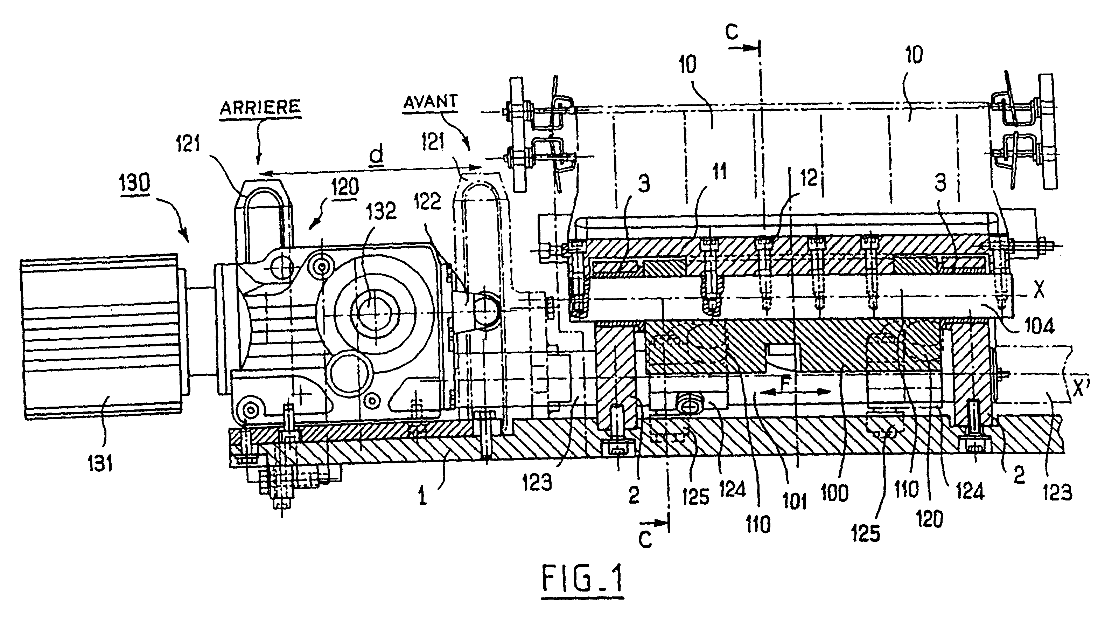

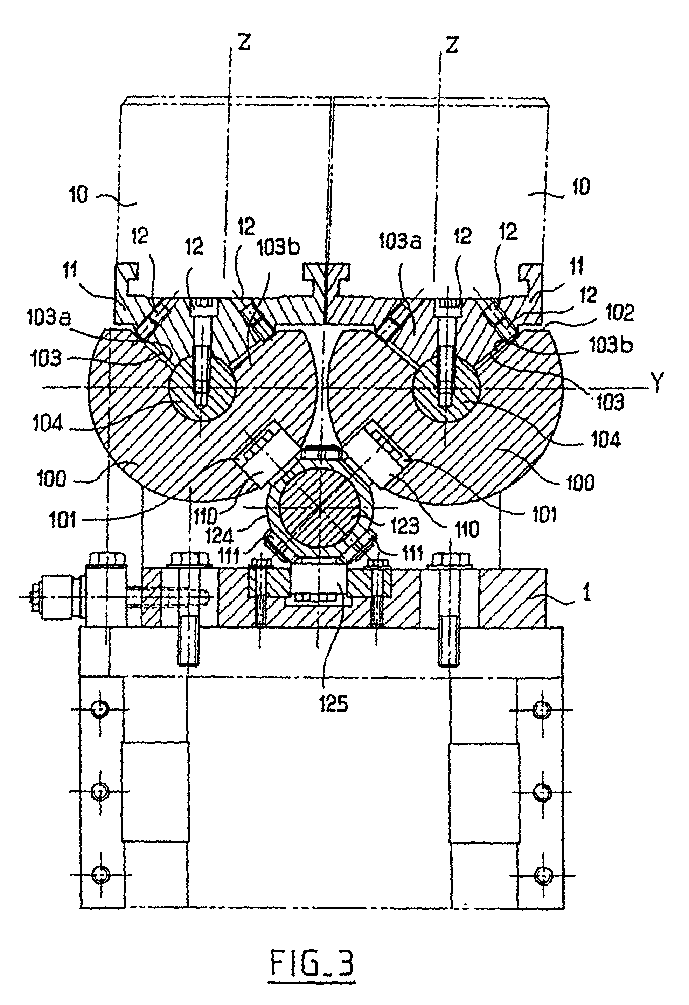

Sur les figures 1 et 3, on a représenté un dispositif de basculement de deux moules de formage 10 de pots en matière plastique, entre une positon horizontale et une position verticale, dans une machine de thermoformage desdits pots.

Dans cette machine de thermoformage, il est prévu un bloc d'introduction de banderoles de décor (non représenté) positionné selon un axe horizontal Y sur le côté latéral externe de chaque moule de thermoformage 10. Chaque bloc d'introduction présente les banderoles de décor enroulées sur elles-mêmes selon l'axe Y horizontal.

Ainsi, pour pouvoir introduire les banderoles de décor à l'intérieur des alvéoles des moules 10, les moules de formage 10 doivent être positionnés de sorte que leurs ouvertures soient dirigées en direction des blocs d'introduction de banderoles, c'est-à-dire avec leurs axes parallèles à l'axe horizontal Y.

En outre, dans cette machine de thermoformage, il est prévu un poinçon de formage (non représenté sur les figures), positionné au-dessus des moules de formage, et le formage des pots en matière plastique s'effectue par un mouvement relatif vertical du poinçon de formage et des moules de formage.

Pour réaliser le thermoformage des pots, les alvéoles des moules 10 présentent leurs ouvertures avec leurs axes orientés verticalement, c'est-à-dire parallèlement à l'axe Z.

Sur les figures 1 et 3, les moules de formage 10, représentés en trait mixte, sont positionnés verticalement, c'est-à-dire avec leurs alvéoles orientées selon l'axe Z.

Le dispositif de basculement des moules de formage 10 comprend ici deux cames 100 à gorge hélicoïdale 101 s'étendant angulairement sur un angle de 90 degrés, montées en parallèle, chacune sur un arbre 104 d'axe horizontal X.

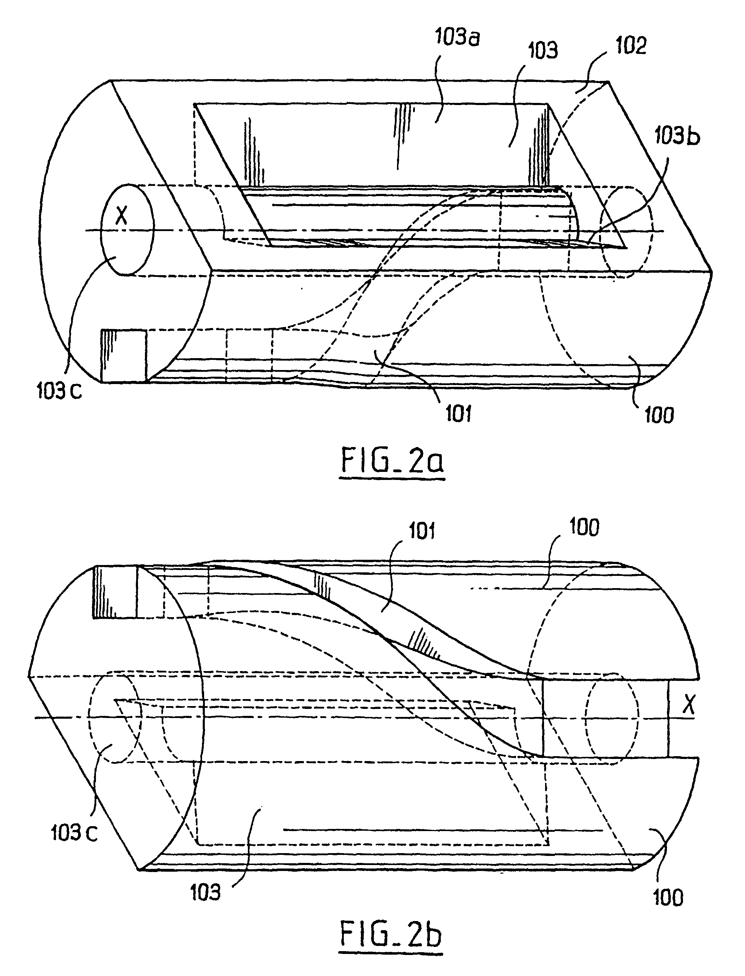

Comme le montrent plus particulièrement les figures 2a et 2b, chaque came 100 est ici un cylindre d'axe X qui comporte un alésage central longitudinal 103c s'étendant selon l'axe X pour le montage de chaque came 100 sur chaque arbre horizontal 104 d'axe X.

Chaque arbre 104 d'axe X, est monté à rotation libre dans des paliers 3 portés par des supports verticaux 2 fixés par vissage sur un support de bâti horizontal 1 du dispositif de basculement.

Chaque cylindre d'axe X constituant chaque came 100 est pourvu d'un méplat 102 pour le montage d'un moule de formage 10, et à l'opposé dudit méplat 102, de la gorge 101 constituée par une portion d'hélice qui s'étend linéairement pratiquement sur toute la longueur dudit cylindre.

Selon le mode de réalisation représenté sur les figures, cette gorge hélicoïdale 101 présente une section carrée.

Chaque came 100 comporte un logement 103 formé dans ledit méplat 102 dans lequel est monté un moule de formage 10.

Comme on peut le voir sur la figure 3, chaque moule de formage 10 est positionné dans un support de moule 11 fixé par l'intermédiaire de vis 12 sur les parois inclinées 103a, 103b du logement 103 de came 100 et sur l'arbre 104 de rotation de la came.

Bien entendu, selon une variante de réalisation non représentée, on peut prévoir que chaque came est un cylindre d'axe X raccordé à un support de moule de formage placé selon l'axe X à la suite de ladite came.

Chaque came 100 à gorge hélicoïdale 101 est actionnée à pivotement par un galet de came 110 engagé dans ladite gorge hélicoïdale 101 de chaque came et animé d'un mouvement linéaire alternatif sous l'action d'un moyen de transmission 120 du mouvement de rotation d'un moteur électrique d'entraînement à rotation 130.

Plus particulièrement, selon l'exemple représenté sur les figures, le moteur d'entraînement à rotation est un moto-réducteur 131 qui entraîne en rotation un arbre de sortie 132 sur lequel est monté un ensemble bielle/manivelle 121, 122.

Le moto-réducteur effectue avantageusement une rotation complète en environ 1 seconde.

Lors d'une demi-rotation du moteur, la manivelle 122 qui effectue également une demi-rotation coulisse dans le logement de la bielle 121 pour translater cette dernière d'une distance d entre une position arrière (représentée en trait plein sur la figure 1) et une position avant (représentée en trait mixte sur la figure 1).

La bielle 121 comporte en partie inférieure un bras 123 qui s'étend selon un axe horizontal X' parallèle à l'axe X de rotation des cames 100.

Cet arbre 123 porte à son extrémité un support 124 commun pour les deux galets de came 110, disposé autour de l'arbre 123 (voir figure 3).

Les deux galets de came 110 sont fixés sur le support 124 entourant l'arbre 123, selon des axes formant un angle de 90 degrés entre eux.

Les galets de came 110 sont fixés par l'intermédiaire de tiges (non représentées sur les figures) qui traversent le support 124 et le bras 123, et qui sont vissées sur le support 124 par l'intermédiaire de vis 111 du côté opposé au côté supportant les galets de came 110.

Comme le montre plus particulièrement la figure 1, les deux galets de came 110 sont légèrement décalés selon l'axe X' l'un par rapport à l'autre pour permettre leur montage sur leur support 124 positionné autour du bras 123.

En outre, le support 124 des galets de came 110 comporte en partie inférieure un galet 125 anti-rotation qui coulisse dans une rainure prévue à cet effet dans le support de bâti horizontal 1.

Le bras 123 de translation des galets de came 110, est supporté par des paliers non représentés, prévus dans les supports verticaux 2 dans lesquels sont également prévus les paliers 3 de rotation des arbres 104 d'entraînement en rotation des cames 100.

Lorsque la bielle 121 se déplace linéairement de la distance d, le bras 123 coulisse à l'intérieur des paliers portés par les supports 2 de la distance d de façon à déplacer selon la flèche F de la même distance les galets de came 110 portés par le support 124 fixé par un vissage audit bras 123.

Chaque gorge hélicoïdale 101 de chaque came 100 s'étend linéairement sur une distance égale à la distance d de déplacement de la bielle 121.

Sur cette distance linéaire d, chaque gorge hélicoïdale 101 parcourt un angle de 90 degrés.

Ainsi, lors d'une demi-rotation de l'arbre de sortie 132 du moteur électrique d'entraînement 130, la bielle 121 parcourt linéairement la distance d d'arrière en avant et entraîne les galets de came 110 selon un mouvement linéaire horizontal selon l'axe X', sur la distance d de sorte qu'ils parcourent les gorges hélicoïdales 101 de leurs cames respectives et entraînent en rotation lesdites cames 100 sur un secteur angulaire de 90 degrés pour faire passer les moules de formage de la position verticale à la position horizontale.

Lors de la demi-rotation suivante, la bielle 121 effectue un mouvement d'avant en arrière de la distance d et entraîne par l'intermédiaire du bras 123 les galets de came 110 dans le sens inverse selon l'axe X' de façon à ce qu'ils parcourent de nouveau les gorges hélicoïdales correspondantes 101 et entraînent en rotation dans le sens inverse lesdites cames 100 pour ramener de la position horizontale vers la position verticale les moules de formage solidaires des dites cames.

Il est intéressant de préciser que selon le mode de réalisation représenté, les galets de came 110 étant légèrement décalés axialement, lesdites gorges hélicoïdales 101 des cames 100 sont également légèrement décalées axialement du même décalage selon l'axe X.

La présente invention n'est nullement limitée aux modes de réalisation décrits et représentés, mais l'homme du métier saura y apporter toute variante conforme à son esprit.

## Revendications

1. Dispositif de basculement d'un moule de formage (10) de pots en matière plastique, entre une position horizontale et une position verticale, dans une machine de thermoformage desdits pots, **caractérisé en ce qu'**il comprend une came (100) à gorge hélicoïdale (101) s'étendant angulairement sur un angle de 90 degrés, montée à rotation libre sur un axe horizontal (X) et actionnée à pivotement par un galet de came (110) engagé dans ladite gorge hélicoïdale (101) et animé d'un mouvement linéaire alternatif sous l'action d'un moyen de transmission (120) du mouvement de rotation d'un moteur électrique d'entraînement en rotation (130).

2. Dispositif selon la revendication 1, **caractérisé en ce que** la came (100) est un cylindre d'axe X, pourvu d'une part d'un méplat (102) pour le montage du moule de formage (10), et d'autre part, à l'opposé dudit méplat (102), de la gorge (101) constituée par une portion d'hélice qui s'étend linéairement pratiquement sur toute la longueur dudit cylindre.

3. Dispositif selon la revendication 2, **caractérisé en ce que** ladite came (100) comporte un logement (103) dans lequel est monté le moule de formage, ledit logement (103) étant formé dans ledit méplat (102).

4. Dispositif selon la revendication 1, **caractérisé en ce que** la came (100) est un cylindre d'axe X, raccordé à un support de moule de formage placé selon l'axe X à la suite de ladite came.

5. Dispositif selon l'une quelconque des revendications 1 à 4, **caractérisé en ce que** le galet de came (110) effectue un mouvement linéaire altematif parallèlement à l'axe (X) de rotation de la came (100).

6. Dispositif selon l'une quelconque des revendications précédentes, **caractérisé en ce que** ledit système de transmission (120) comprend un ensemble bielle/manivelle (121, 122) raccordé d'une part à l'arbre de sortie (132) du moteur électrique d'entraînement en rotation et d'autre part audit galet de came (110) par l'intermédiaire d'un bras (123) s'étendant parallèlement à l'axe (X) de rotation de la came.

7. Dispositif selon l'une quelconque des revendications précédentes, **caractérisé en ce que** le moteur électrique d'entraînement en rotation effectue une rotation complète en environ 1 seconde.

8. Dispositif selon l'une des revendications précédentes, **caractérisé en ce que** le moteur électrique d'entraînement en rotation est un moto-réducteur.

9. Dispositif selon l'une quelconque des revendications précédentes, **caractérisé en ce qu'**il comporte deux cames (100) à gorge hélicoïdale (101) pour le basculement de deux moules de formage (10), actionnées par deux galets de came (110) animés d'un mouvement linéaire alternatif sous l'action du même moyen de transmission (110) du mouvement de rotation du moteur électrique d'entraînement.

10. Machine de thermoformage de pots en matière plastique, comprenant un moule de formage pourvu d'alvéoles pour la formation de pots en matière plastique, un poinçon de formage coopérant avec ledit moule pour la formation des pots en matière plastique, un bloc d'introduction de banderoles de décor à l'intérieur des alvéoles du moule de formage, positionné latéralement par rapport au moule de formage, et un dispositif de basculement du moule selon l'une quelconque des revendications 1 à 9.

## Claims

1. Device for tilting a mould (10) for forming plastics material pots between a horizontal position and a vertical position in a machine for thermoforming the said pots, **characterized in that** it includes a cam (100) with a helical groove (101) subtending an angle of 90°, mounted to rotate freely about a horizontal axis (X) and pivoted by a cam roller (110) engaged in the said helical groove (101) and reciprocated linearly by transmission means (120) for transmitting the rotary motion of a rotary electric drive motor (130).

2. Device according to Claim 1, **characterized in that** the cam (100) is a cylinder which is concentric with the horizontal axis X and has a flat (102) for mounting the forming mould (10) and, opposite the said flat (102), the groove (101), which consists of a portion of a helix which extends linearly over substantially all the length of the said cylinder.

3. Device according to Claim 2, **characterized in that** the said cam (100) includes a housing (103) formed in the said flat (102) and in which the forming mould is mounted.

4. Device according to Claim 1, **characterized in that** the cam (100) is a cylinder concentric with the horizontal axis X and connected to a forming mould support placed on the axis X downstream of the said cam.

5. Device according to any of Claims 1 to 4, **characterized in that** the cam roller (110) reciprocates linearly parallel to the rotation axis (X) of the cam (100).

6. Device according to any preceding claim, **characterized in that** the said transmission system (120) includes a link/crank system (121, 122) connected to the output shaft (132) of the rotary electric drive motor and to the said cam roller (110) via an arm (123) parallel to the rotation axis (X) of the cam.

7. Device according to any preceding claim, **characterized in that** the rotary electric drive motor completes one rotation in approximately one second.

8. Device according to any preceding claim, **characterized in that** the rotary electric drive motor is a gear motor.

9. A device according to any preceding claim, **characterized in that** it includes two cams (100) which have respective helical grooves (101) for tilting two forming moulds (10) and which are actuated by two cam rollers (110) reciprocated linearly by the same transmission means (110) for transmitting rotary movement of the electric drive motor.

10. Machine for thermoforming plastics material pots including a forming mould provided with cells for forming plastics material pots, a forming punch cooperating with the said mould to form the said plastics material pots, a unit for inserting decorative strips into the cells of the forming mould and positioned laterally relative to the forming mould, and a mould tilting device according to any of Claims 1 to 9.

## Patentansprüche

1. Vorrichtung zum Schwenken eines Formwerkzeugs (10) für Becher aus Plastikmaterial zwischen einer horizontalen und einer vertikalen Position in einer Warmumformmaschine für Becher,
**gekennzeichnet durch**
einen Nocken (100) mit schraubenförmiger Rinne (101), die einen Winkel von 90° beschreibt, der um eine horizontale Achse (X) frei drehbar befestigt ist und **durch** eine Nockenrolle (110) in Drehung versetzt wird, die in die schraubenförmige Rinne greift und **durch** ein Mittel (120) für die Übertragung der Drehbewegung eines elektrischen Rotationsantriebsmotors (130) in eine alternierende Linearbewegung versetzt wird.

2. Vorrichtung nach Anspruch 1,
**dadurch gekennzeichnet, dass**
der Nocken (100) ein Zylinder mit der Achse X ist, der einerseits mit einer Abflachung (102) für die Befestigung des Formwerkzeugs (10) und andererseits gegenüber der Abflachung (102) mit der Rinne (101) in Form eines Schraubenabschnitts versehen ist, der sich linear praktisch über die gesamte Länge des Zylinders erstreckt.

3. Vorrichtung nach Anspruch 2,
**dadurch gekennzeichnet, dass**
der Nocken (100) eine Aufnahme (103) aufweist, in der das Formwerkzeug befestigt ist, wobei die Aufnahme (103) an der Abflachung (102) ausgebildet ist.

4. Vorrichtung nach Anspruch 1,
**dadurch gekennzeichnet, dass**
der Nocken (100) ein Zylinder mit der Achse X ist, der mit einem Träger des Formwerkzeugs verbunden ist, der entlang der X-Achse hinter dem Nocken angeordnet ist.

5. Vorrichtung nach einem der Ansprüche 1 bis 4,
**dadurch gekennzeichnet, dass**
die Nockenrolle (110) eine alternierende lineare Bewegung parallel zu der Rotationsachse (X) des Nockens (100) durchführt.

6. Vorrichtung nach einem der vorangehenden Ansprüche,
**dadurch gekennzeichnet, dass**
das Übertragungssystem (120) eine Schubkurbeleinheit (121, 122) umfasst, die einerseits mit der Abtriebswelle (132) des elektrischen Rotationsantriebsmotors und andererseits über einen Arm (123), der sich parallel zu der Rotationsachse (X) des Nockens erstreckt, mit der Nockenrolle (110) verbunden ist.

7. Vorrichtung nach einem der vorangehenden Ansprüche,
**dadurch gekennzeichnet, dass**
der elektrische Rotationsantriebsmotor eine vollständige Umdrehung in 1 Sekunde macht.

8. Vorrichtung nach einem der vorangehenden Ansprüche,
**dadurch gekennzeichnet, dass**
der elektrische Rotationsantriebsmotor ein Getriebemotor ist.

9. Vorrichtung nach einem der vorangehenden Ansprüche,
**gekennzeichnet durch**
zwei Nocken mit schraubenförmiger Rinne (101) für das Kippen von zwei Formwerkzeugen (10), die **durch** zwei Nockenrollen (110) betätigt werden, die **durch** dasselbe Mittel (120) für die Übertragung einer Drehbewegung des elektrischen Rotationsantriebsmotors (130) in eine alternierende Linearbewegung versetzt werden.

10. Warmumformmaschine für Becher aus Plastikmaterial mit
einem Formwerkzeug, das mit Zellen für das Formen von Bechern aus Plastikmaterial versehen ist,
einem Stempel zum Formen, der bei dem Formen der Becher aus Plastikmaterial mit dem Werkzeug zusammenwirkt,
einem Block für die Zufuhr von Verzierungsbanderolen zu den Zellen des Formwerkzeugs, der seitlich in Bezug auf das Formwerkzeug angeordnet ist, und
einer Vorrichtung zum Schwenken nach einem der Ansprüche 1 bis 9.
